# EUROPEAN PATENT SPECIFICATION

(11) **EP 1 651 336 B1**
(45) Date of publication and mention of the grant of the patent: **28.05.2008**
(21) Application number: 04738134.8
(22) Date of filing: 06.08.2004
(51) Int. Cl.: B01F 7/28, B01F 7/00, B01F 15/06, B01J 19/18, B01J 10/02

(54) **ROTATING STIRRING DEVICE WITH SUBSTANTIALLY NARROW DISTRIBUTION OF ENERGY DISSIPATION RATE AND PROCESSES**
ROTIERENDE RÜHRVORRICHTUNG MIT ENGER VERTEILUNG DES ENERGIEUMWANDLUNGSGRADS UND VERFAHREN
DISPOSITIF AGITATEUR A ROTATION AVEC UNE DISTRIBUTION ETROITE DE DISSIPATION D'ENERGIE ET PROCEDES

(30) Priority: 08.08.2003 EP 03018073; 27.08.2003 EP 03019330
(43) Date of publication of application: 03.05.2006
(73) Proprietor: ETH Zürich, 8092 Zürich (CH)
(72) Inventor: MORBIDELLI, Massimo, CH-8046 Zürich (CH); SOOS, Miroslav, CH-8052 Zürich (CH); WU, Hua, CH-8057 Zürich (CH)
(74) Representative: Irniger, Ernst
(86) International application number: PCT/CH2004/000494
(87) International publication number: WO 2005/014153

(56) References cited:
- EP-A- 0 194 812
- GB-A- 931 590
- GB-A- 2 103 229
- US-A- 3 407 046
- US-A- 4 175 871
- US-A- 4 911 847

## Description

### Field of the Invention

The present invention relates to a rotating stirring and/or reacting device particularly suitable for mixing processes that require substantially narrow distribution of energy dissipation rate.

### Background of the Invention

Various types of mechanically stirred reactors are known in the art, generally of cylindrical body, and equipped along their axis with a stirring system, which is commonly a stirrer (turbine, impeller, propeller, blade, etc.) or a group of stirrers. These reactors are hereinafter referred to as "ST (stirred tank) reactors". The ST reactors are used for processes that require continuous mixing of various components and efficient mass exchange between different phases (e.g. gas-liquid, gas-liquid-solid, liquid-liquid, liquid-solid, etc.). Proper selection of a stirring system for a particular process depends mainly on the viscosity of the mass to be stirred (see "Advances in Chemical Engineering," vol. 17, pag. 5-8, Academic Press, 1992 (Ref. 1) and US Pat. No. 5,460,447).

A common shortcoming of the ST reactors is a broad distribution of the energy dissipation rate (defined as energy dissipated per unit mass) in the mass contained in the reactors, which is undesired for processes that are sensitive to the local energy dissipation rate. For example, when the reaction kinetics of a polymerization process is sensitive to the local energy dissipation rate, a broad distribution of the energy dissipation rate in the reactor may lead to a broad distribution of molecular weight. For a bio-reaction process, when the distribution of the energy dissipation rate is broad, the large energy dissipation rates in the tail of the distribution lead to large turbulent shear rate, which can damage the bio-cells contained in the system.

An alternative design of reactors used for the processes mentioned above in the art is the Couette flow reactors, composed of two concentric cylinders where the inner cylinder is generally rotating. The gap between the two cylinders is the location where a process takes place. When the rotating speed is low, the Couette flow reactor can generate very uniform laminar shear rate, but mixing in the gap is generally very poor. Moreover, to get sufficiently large shear rate for practical applications, the gap between the cylinders must be very small, leading to very small volume of the reactor, which becomes meaningless in industrial applications. In fact, the Couette flow reactor is generally designed to have significantly large gap (in order to have significantly large volume of the reactor) and to operate at a significantly large rotation speed (see Zhu and Vigil, 2001 (Ref 2), Haut at al., 2003 (Ref 3), US Pat. No. 4,911,847 and US Pat. No. 6,099,730). In this case, with increasing the rotation speed, a series of (laminar, wavy, turbulent) vortices, called Taylor vortices, are generated in the gap, and the reactor is hereafter referred to as "TC" (Taylor-Couette) reactor. Vortices may be generated even at relative low rotational speeds, if V-shaped grooves are present on the inner cylinder as proposed in the US Pat. No. 4,175,871. With respect to the ST reactors, the advantage of the TC reactors is absence of the distribution tails with substantially small and large energy dissipation rates. Therefore, the TC reactors are particularly suitable for applications involving fragile materials such as bio-cells, colloids, etc. However, the TC reactors have the following common disadvantages (see Haut et al., 2003 (Ref 3); Drozdov, 2002 (Ref 4); Resende et al., 2001 (Ref 5)): (1) poor mass transfer within the vortices, (2) possible separation of components in the gap when there is a difference in the density between components, and (3) a large drag torque and high power input per unit volume.

To overcome the above drawbacks of the TC reactors, Drozdov (Ref 4) proposed to use undulated surfaces for both the outer and inner cylinders, based on some sophisticated analytical mathematical formulas. However, manufacturing and scaling-up of such designed reactors are challenging.

In the UK Pat. GB 2 103 229 a further reactor type is described, where the inner reactor body with a polygon-type cross-section rotates coaxially within a tube. A similar design was described in a previous art (GB 931590). During the rotational motion of the inner body or the outer tube, the edges of the inner body make practically sliding contact with the inside of the outer tube and divide the gap between the inner body and the outer tube into several chambers. A limited material exchange between the separated chambers may occur through the thin film generated between the edges of the inner body and the outer tube during the rotation. It is obvious that this type of reactor is not suitable for those reactions, where an intimate intensive mixture between the various reaction components has to be achieved. In addition, the energy dissipation rate in the zones of the sliding contact between the edges of the inner body and the outer tube must be substantially large. Thus, this type of reactor has the same drawback as the ST reactors.

The object of the present invention is therefore to propose a further type of reactor in accordance with claim 1 which generates a substantially narrow distribution of energy dissipation rate to overcome the drawbacks as described above.

A new type of rotating stirring device is described hereinunder, which generates a substantially narrow distribution of energy dissipation rate, thus avoiding the drawbacks that the TC and ST reactors have. The invented devices are particularly suitable for processes that require a homogeneous turbulent flow environment and involving fragile components.

### Summary of the Invention

The present invention utilizes the principle of applying non-constant gap width between an inner and an outer member in the Taylor Couette device in order to reduce or completely destroy the Taylor vortices in the Taylor Couette device, as a result, to obtain a substantially narrow distribution of energy dissipation rate within the gap. The non-constant gap width in this invention is realized by using a non-circular cross-section for the inner member of the Taylor Couette device along the radial direction perpendicular to a rotation axis. The cross-section of the inner member perpendicular to the rotation axis can be any type of equilateral or inequilateral polygons with curved cusps. Typical examples for the cross-section shape of the inner member are: elliptical, triangle, rectangular, square, etc.

The characteristics of the invention will be further illustrated by the following description and by the enclosed drawings relating to a non-limitative embodiment.

### Brief Description of the Drawings

FIG.1 is a cross-sectional view, perpendicular to the rotation axis, of a schematic illustration of the new rotating stirring device of the invention for a case with the inner member of the square-type polygon.
FIG. 2 is a cross-sectional view, along the rotation axis, of a schematic illustration of the new rotating stirring device of the invention for a case with the inner member of an odd-number lateral polygon.
FIG. **3** shows a comparison between the axial velocity profiles measured using the PIV technique and computed using the commercial CFD software Fluent, in the gap of a TC reactor with the inner cylinder rotation. The rotation speed of the inner cylinder is 2.6 rad/s.
FIG. **4** shows a comparison between the axial velocity profiles measured using the PIV technique and computed using the commercial CFD software Fluent, in the gap of a TC reactor with the inner cylinder rotation. The rotation speed of the inner cylinder is 4.9 rad/s.
FIG. 5 shows a comparison between the average radial velocity profiles in a stirred tank reactor, measured using the LDV technique and computed using the commercial CFD software Fluent.
FIG. 6 shows a comparison between the average tangential velocity profiles in a stirred tank reactor, measured using the LDV technique and computed using the commercial CFD software Fluent.
FIG. 7 shows a comparison between the average axial velocity profiles in a stirred tank reactor, measured using the LDV technique and computed using the commercial CFD software Fluent.
FIG. 8 is a cross-sectional view, along the rotation axis, of a schematic illustration of a stirred tank reactor of the prior art.
FIG. 9 is a cross-sectional view, along the rotation axis, of a schematic illustration of a Taylor Couette reactor of the prior art.
FIG.**10** shows a comparison of the distribution of the energy dissipation rate between the rotating stirring devices according to the present invention and the prior art.
FIG.**11** shows the distributions of the energy dissipation rate of the rotating stirring devices according to the present invention of different designs.

### Detailed Description of the Preferred Embodiments

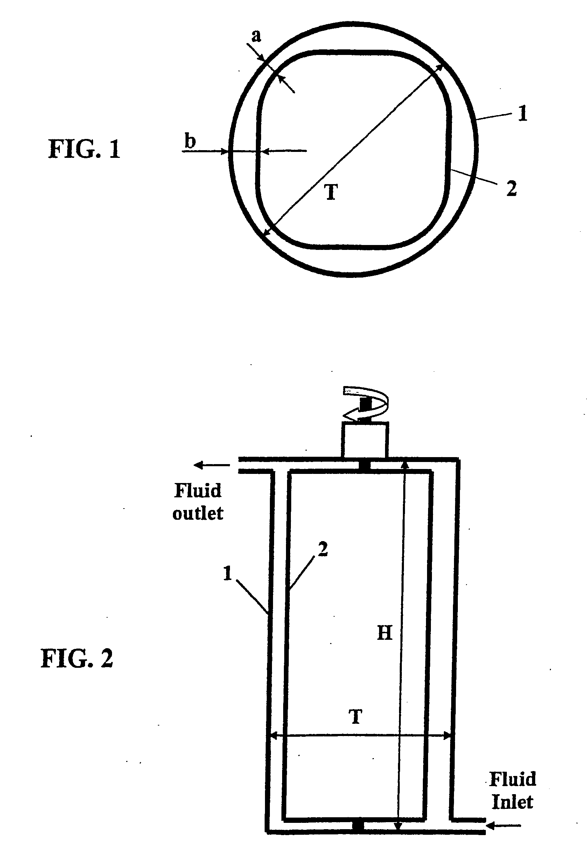

With reference to FIG. **1****,** the rotating stirring device comprises an outer in one direction extending vessel-like member such as e.g. a cylinder **1** and a preferably concentrically mounted inner in the same direction extending member **2.** The shape of the cross-section of the inner member perpendicular to the rotation axis, according to a preferred embodiment of the present invention, is an equilateral polygon with curved cusps, preferably elliptical or triangle or square. The inner member is mounted for rotation within the outer member such as the cylinder.

In this embodiment, the inner member of the polygon shape mounted in the outer e.g. cylinder generates a minimum gap, **a**, and a maximum gap, **b**, as illustrated in FIG. **1****.** The ratio of the maximum gap to the minimum gap, **b/a**, is ≥1.1, preferably in the range 1.2-3. The ratio of the internal diameter **T** of the outer e.g. cylinder to the minimum gap **a, T/a**, is ≤50, preferably in the range 5-20.

With reference to FIG. **2****,** the size characteristics of the outer member such as e.g. the cylinder, specifically its internal diameter **T** and its height **H,** according to the invention depend essentially on the requirement of the process where the device is employed, such as requirement on the reactor volume, fluid feeding rate and average residence time of the fluid in the reactor.

It is evident that the surface of both the inner and outer members of the present invention can be a porous membrane, which can be used for the purpose of filtration and separation, and as carrier for immobilized catalyst, bio-active species, etc.

Of course, when the inner member has an empty internal body, at each of its two ends a cover must be present in order to prevent the fluid falling into the internal space of the inner member, and the cover is also the location where the rotating shaft or the bearing shaft is fixed. At each of the two ends of the outer cylinder a cover must be present in order to keep the fluid in the reactor. Optionally, the two ends of both the inner and outer members can be designed in conical or spherical form which can improve fluid mixing in the space between the covers of the inner and outer members. Obviously, when the rotating stirring device is installed vertically, the top end cover of the outer cylinder may be avoided, depending on the requirement of the process.

It is evident that as to the embodiment previously illustrated, various changes, adjustments, variants and replacements of elements with other functionally equivalent elements can be carried out, while remaining within the scope of the claims reported hereinafter.

Because of the substantially narrow distribution of the energy dissipation rate, the present invention is particularly advantageous for reactors or mixers to be used in:
bio(chemical) reactions for the production of biologically active products for pharmaceutical applications, in particular those reactions in which cells or microorganisms or products are sensitive to the shear rate generated by an applied stirring device;
processes where the Taylor Couette device is currently applied, in particular for improving the mass transfer of components in processes of single or multiple phases, and for avoiding the presence of the Taylor vortices within the gap between the inner and outer cylinders;
(co)polymerization reactions in emulsion, in particular in the cases where the polymerization kinetics, molecular weight distribution of the polymers and the stability of the polymer colloids, are sensitive to the shear rate generated by an applied stirring device;
(co)polymerization reactions in suspension, in particular in the case where the polymerization kinetics and molecular weight distribution of the polymers are sensitive to the shear rate generated by an applied stirring device;
shear-induced granulation or coagulation for the production of controlled morphology and size of granules, in particular from soft protein foodstuffs or from inorganic or polymer colloids.

As described previously, the rotating stirring device of the present invention generates a substantially narrow distribution of the energy dissipation rate, which leads to a substantially narrow distribution of the shear rate in the stirred fluid. In the case of bio-chemical reactions, a narrow distribution of the shear rate is extremely advantageous, since it allows cells or microorganisms or products to practically operate under the same shear forces, thus avoiding their damage due to the presence of high local shear forces in some regions, as in the case of the ST reactors.

The non-constant gap width utilized in the present invention reduces or completely avoids the presence of the Taylor vortices, as often present in the case of the TC reactors, and it together with the narrow distribution of the shear rate avoids the possible separation of components in the gap when there is a difference in the density between components. Moreover, according to the present invention, the power input is substantially lower than those of the TC reactors, which will be clearly seen hereinafter in TABLE 1.

In the case of polymerizations in emulsion, a narrow distribution of the shear rate leads to the advantage that it avoids the undesired formation of polymer coagula due to the presence of high local shear forces in some regions, as in the case of the ST reactors. It is well known that such coagula, besides of fouling the reactor with subsequent maintenance problems, cause various inconveniences such as reducing the stability of the polymer latexes, contamination of the polymer, lowing the reaction rate, etc.

In the case of polymerizations in suspension, a narrow distribution of the shear rate allows one to obtain a narrow distribution of the polymer beads, as it leads to the formation of the particles occurring in the entire volume of the reactor and to a uniform growth rate of the formed particles. The axis of the present stirring device for the processes of suspension polymerizations is preferably placed horizontally.

### EXAMPLES

### Characterization Methods

Currently, there is no effective technique that can directly measure the distribution of energy dissipation rate or distribution of shear rate in a mechanically stirred reactor, though there do exist techniques to measure average velocity profiles and flow patterns, such as using laser Doppler velocimetry (LDV) (Wu and Patterson, Ref 8) and particle image velocimetry (PIV) (Haut et al., Ref 3). However, the LDV and PIV techniques are difficult to apply to the device of the present invention, because of the deformed inner member, which leads to the flow pattern at a fixed location inside the gap varying periodically with time. On the other hand, it has been confirmed that for single-phase fluid, the commercial software for computational fluid dynamics (CFD) simulations, such as Fluent (Fluent INC. 10 Cavendish Court, Lebanon, NH 03766-1442, USA), CFX (CFX Ltd., The Gemini Building, Fermi Avenue, Harwell International Business Centre, Didcot, Oxfordshire OX11 0QR, UK) and StarCD (CD adapco Groupe, London office, 200 Shepherds Bush Road, London W6 7NY, UK), can correctly reproduce the average velocity profiles and flow patterns measured by LDV and PIV techniques (Haut et al., 2003 (Ref. 3); Zhu and Vigil, 2001 (Ref. 4); Mavros et al., 2001 (Ref. 6); Campolo et al., 2003(Ref. 7)). Therefore, in the following examples, the distribution of energy dissipation rate as well as the other fluid dynamic properties in each rotating stirring device is obtained based on single-phase CFD simulations, using the commercial CFD software, Fluent (version 6.1).

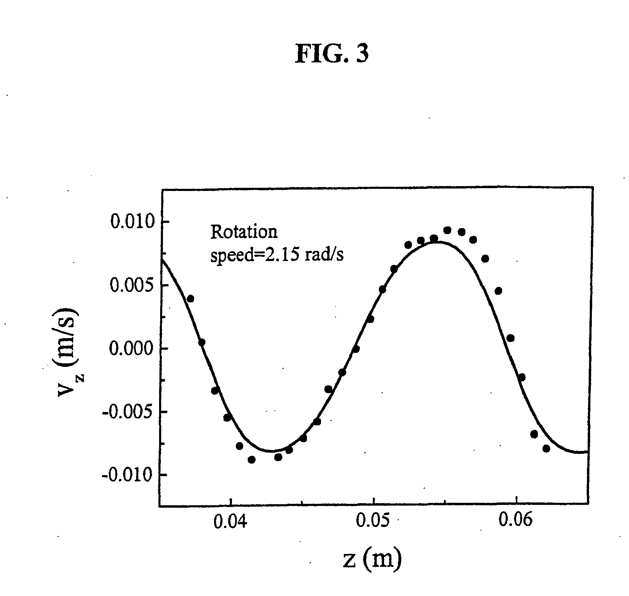

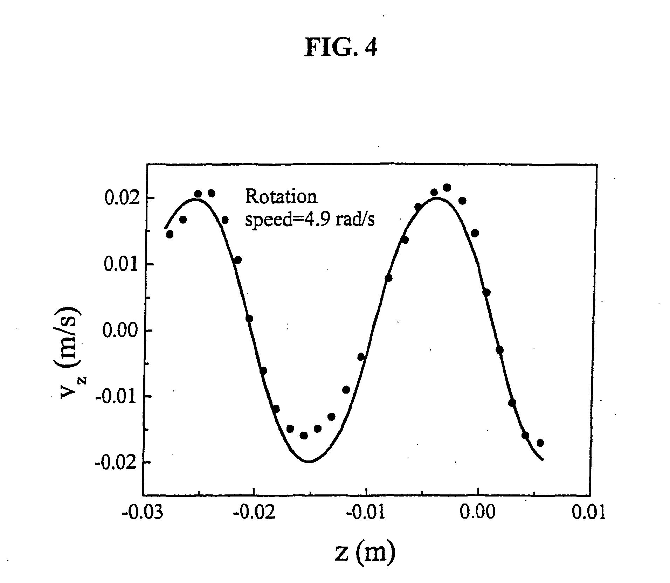

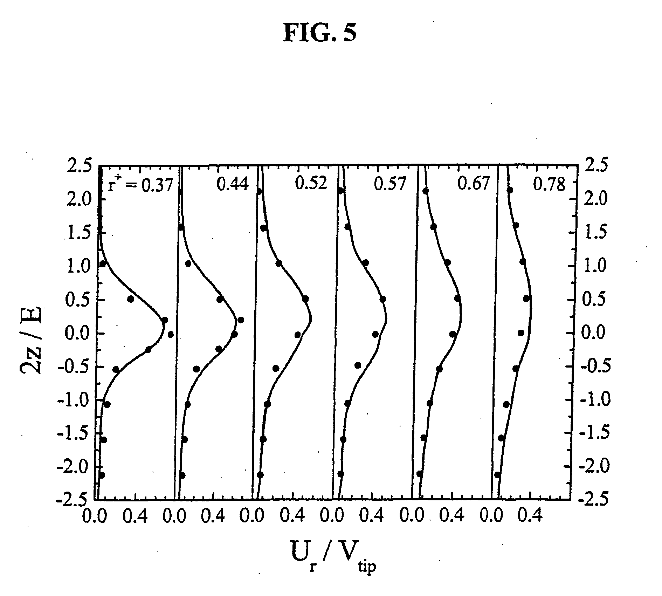

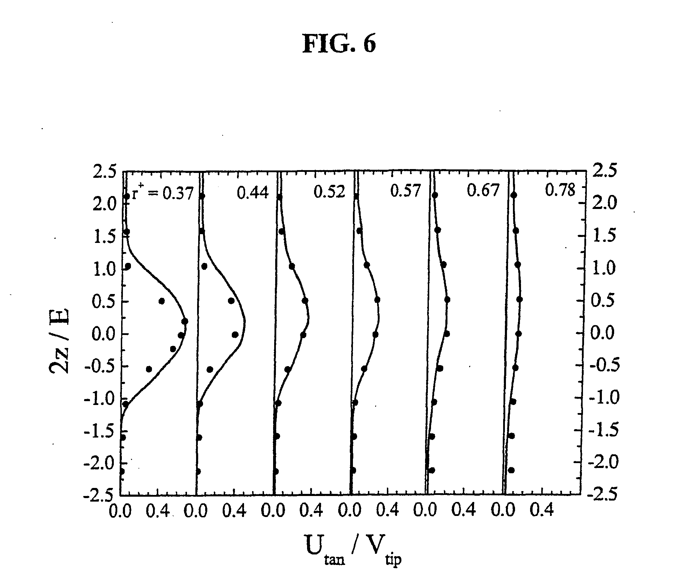

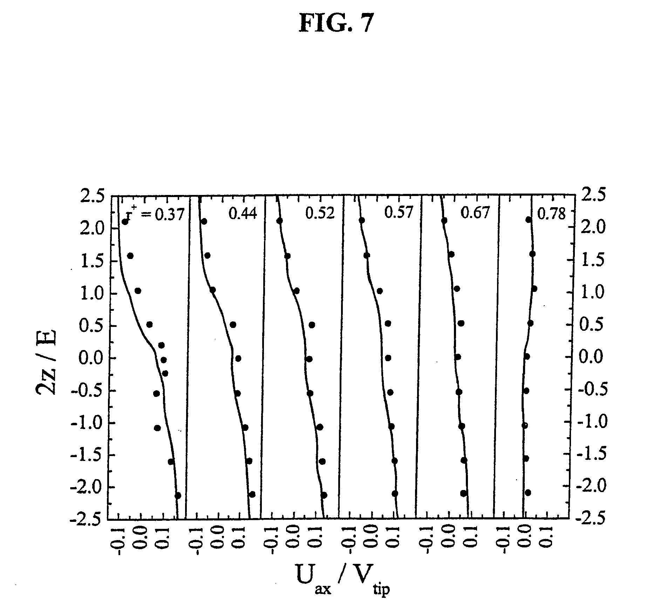

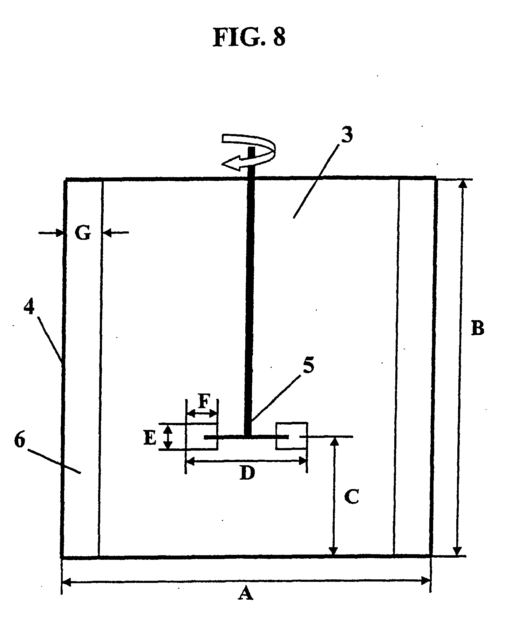

Moreover, in order to verify that the CFD software Fluent has been correctly utilized, before carrying out the computations for the cases in the following examples, the Fluent software has been used to compute the average velocity profiles in a TC reactor and a ST reactor, and the results of the experimental data reported in the literature have been compared. In particular, Haut et al. (Ref 3) have measured axial velocity profiles in the gap of a TC reactor using the PIV technique. The TC reactor has the radii of 4 cm and 4.85 cm for the inner and outer cylinders, respectively, and the inner cylinder was rotating. The results at the rotation speeds of the inner cylinder, 2.15 rad/s and 4.9 rad/s, are reproduced in FIG. **3** and FIG. **4** with symbols (•), where z is the axial coordinate with unit m, and v_{z} is the mean axial velocity (with unit m/s) on the circumferential surface that has a distance, 2.125 mm from the surface of the inner cylinder: In FIG. **3** and FIG. **4** the solid curves are the mean axial velocity profiles computed by us using Fluent. It is seen that the agreement between experiments and numerical simulations is very satisfactory. The ST reactor that we have simulated is the one used by Wu and Patterson (Ref 8) to perform the measurements of the average velocity profiles using the LDV technique. The ST reactor has a diameter of 27 cm, equipped with a Rushton turbine and four baffles, and its height is equal to the diameter. In FIG. **5****,** FIG. **6** and FIG. **7****,** are respectively shown the average radial (Uᵣ), tangential (Uₜₐₙ) and axial (Uₐₓ) velocity profiles, measured experimentally by Wu and Patterson (Ref 8) (symbols •) and computed by us (solid curves) using Fluent. In the figures, z is axial distance from middle point of the agitator blades, Vₜᵢₚ is tip velocity of the blades, and r⁺ is dimensionless radial distance from rotation axis of the turbine (2r/A). Symbols, E and A, are height of the blades and tank diameter, as defined in FIG. **8****.** Again, good agreement has been obtained between experiments and numerical simulations. The computed power number (4.92) also quantitatively agrees with experimentally measured one (4.5-5.0, (Ref 1)) of this type of reactors. Therefore, the results of the single-phase CFD simulations using Fluent are reliable, and the usage of the commercial software, Fluent, is correct.

### Example 1

### Distribution of the energy dissipation rate in a stirred tank (ST) reactor

FIG. **8** shows a section view of the ST reactor of the prior art **3,** composed of a cylindrical body **4,** a six-blades Rushton turbine **5** and four baffles **6** symmetrically placed inside the reactor. The real sizes of the various elements of the reactor employed in the CFD simulations are as follows:
A=B=270 mm; C=90 mm; D=93 mm; E=18.6 mm; F=23.25 mm; G=27 mm.

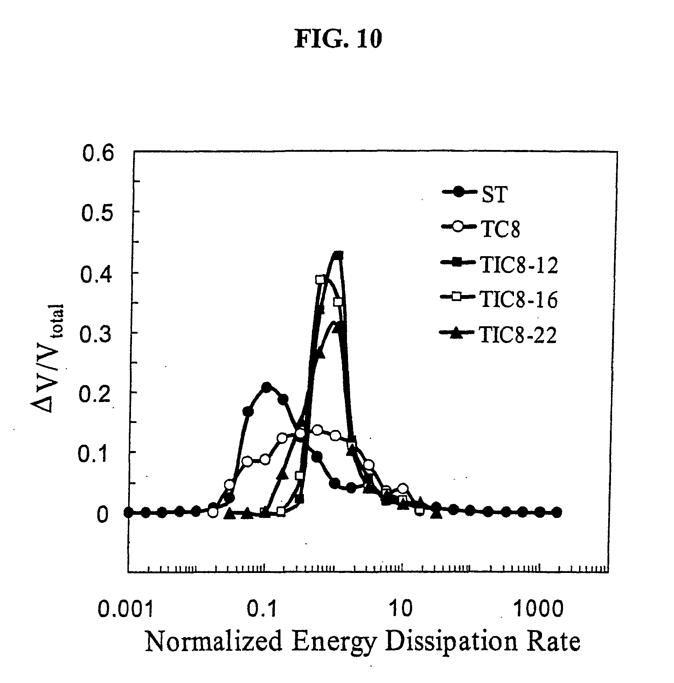

Using Fluent, the volume-based distribution of the energy dissipation rate for the ST reactor geometrically defined above, has been computed with a rotation speed for the Rushton turbine being 8.08 rev/s. The results are reported in FIG. **10** with symbols (•). The abscissa is the normalized energy dissipation rate, defined as the energy dissipation rate divided by the volume-averaged energy dissipation rate. The volume-averaged energy dissipation rate at this rotation speed is computed to be 1.15 m²/s³. It is seen that the distribution is very broad, covering at least 7 orders of magnitude.

### Example 2

### Distribution of the energy dissipation rate in a Taylor Couette (TC) reactor

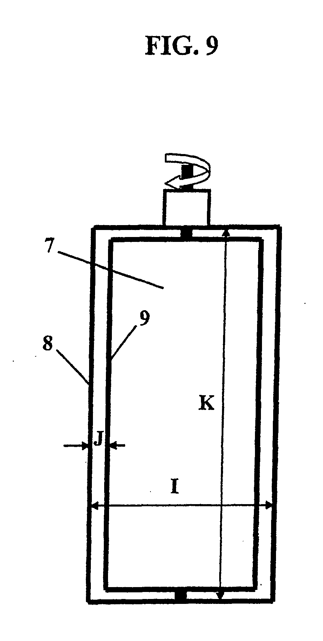

FIG. **9** shows a section view of the TC reactor of the prior art **7,** composed of an outer cylinder **8,** an inner cylinder **9.** Both cylinders have cross-section of circular shape, and they are placed concentrically. The inner cylinder is rotating. The real sizes of the various elements of the reactor employed in the CFD simulations are as follows:
I=140 mm; J=8 mm; K=320 mm.

The distribution of the energy dissipation rate computed using Fluent for the TC reactor geometrically defined above is shown in FIG. **10** with symbols (o TC8). The rotation speed of the inner cylinder employed for the computations is 8.31 rev/s, and this leads to the computed volume-averaged energy dissipation rate to be 1.15 m²/s³, equal to that in Example **1.** The results indicate that the distribution of the energy dissipation rate of the TC reactor is narrower than that of the ST reactor, particularly without the tail in the range of large energy dissipation rate.

### Example 3

### Distributions of the energy dissipation rate in the reactors of a triangle-inner cross-section of the inner member (TIC) according to the present invention

According to the present invention as schematically illustrated in FIG. **1** and FIG. **2****,** e.g. a triangle cross-section of the inner member perpendicular to the rotation axis is employed for the CFD simulations. The real sizes of the various elements of the reactor employed in the simulations are as follows: T=140 mm; H=320 mm; a=8 mm, but three values have been employed for b=12 mm, 16 mm, and 22 mm, thus leading to three different designs of the present invention.

The distributions of the energy dissipation rate computed using Fluent for the three reactors geometrically defined above are shown in FIG. **10** with symbols, ■ TIC8-12 for b=12 mm, □ TIC8-16 for b=16 mm, and ▲ TIC8-22 for b=22 mm. The rotation speeds of the inner member employed for the computations are 5.75 rev/s, 5.59 rev/s, and 5.72 rev/s, respectively for the reactors with b=12 mm, 16 mm, and 22 mm. Using different values of the rotation speed of the inner member for the three designs aims at obtaining an identical volume-averaged energy dissipation rate, being 1.15 m²/s³, which is also equal to those in Examples 1 and 2. It is clearly shown in FIG. **10** that the distributions of the energy dissipation rate of the three reactors of the present invention are substantially narrower than those of the ST and TC reactors of the prior art.

**TABLE 1 Relative power input of different rotating stirring devices at a fixed value of the volume-averaged energy dissipation rate (=1.15 m²/s³).**

| **Rotating Stirring Device** | TC8 | TIC8-12 | TIC8-16 | TIC8-22 | RIC8-16 | SIC8-16 |
|---|---|---|---|---|---|---|
| **Relative Power input** | 1 | 0.63 | 0.61 | 0.58 | 0.60 | 0.60 |

The corresponding power input, defined as power per unit volume, of the three TIC (TIC8-12, TIC8-16 and TIC8-22) reactors are shown in columns 3, 4 and 5 of **TABLE 1,** and compared to the power input of the TC reactor (TC8, in column 2) of the prior art, as geometrically defined in Example 2. The values presented in **TABLE 1** are the relative power input, i.e., the ratio of the power input of the reactor of the present invention to the power input of the TC8 reactor. It is seen that the relative power input is always smaller than unity, indicating that a lower power input is required for the present reactor with respect to the TC reactor in order to obtain the same volume-averaged energy dissipation rate.

### Example 4

### Distributions of the energy dissipation rate in reactors of different types of cross-section for the inner member according to the present invention

According to the present invention as schematically illustrated in FIG. **1** and FIG. **2****,** the elliptical, triangle and square types of cross-section for the inner member perpendicular to the rotation axis are employed for the CFD simulations. The real sizes of the various elements of the reactor employed in the simulations are as follows:
T=140 mm; H=320 mm; a=8 mm; b=16 mm.

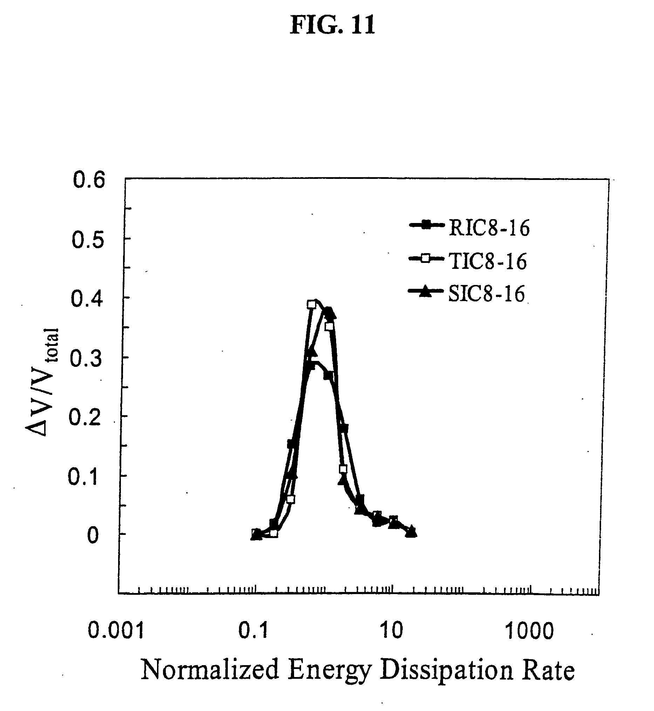

The distributions of the energy dissipation rate computed using Fluent for the three reactors geometrically defined above are shown in FIG. 11 with symbols, ■ RIC, □ TIC, and ▲ SIC, for the reactor with rectangular, triangle, and square cross-section for the inner member, respectively. The rotation speeds of the inner member employed for the computations are 5.65 rev/s, 5.59 rev/s and 5.56 rev/s, respectively for the reactors with the elliptical, triangle, and square cross-section of the inner member. Using different values of the rotation speed of the inner member for the three designs aims at obtaining an identical volume-averaged energy dissipation rate, being 1.15 m²/s³, which is also equal to those in Examples 1, 2 and 3. It is seen from FIG. **11** that the distributions of the energy dissipation rate of the three reactors of the present invention are substantially narrow, much narrower than those of the ST and TC reactors of the prior art as reported in FIG. **10**.

The corresponding relative power input of the RIC8-16 and SIC8-16 reactors are shown in columns 6 and 7 of **TABLE 1,** respectively. Again, they are substantially smaller than unity, indicating that a lower power input is required for these reactors with respect to the TC reactor in order to obtain the same volume-averaged energy dissipation rate.

The reactor designs and the examples described with reference to Figs. 1 to 11 are for the better understanding of the present invention, and the scope of the invention is of course not at all limited to the described embodiments. It is of course possible to modify the designs, the dimensions, the reactors, and the way of how to perform the reactors. Correspondingly, it is possible to choose an inner member with any kind of a cross section differing from a uniform circular shape such as an elliptical triangle, square, or polygon-like cross section with for instance rounded off edges, etc. It is also possible to use an inner member with a wave like surface, with longitudinally extending grooves, with perforations, etc. Vice versa, it is of course possible to use an inner cylinder with a cross-section of circular shape and an outer member with a cross-section of non-circular shape as described above in relation to an inner member with a cross-section of non-circular shape. In the latter case, it is preferred to rotate at least the outer member.

Again according to a further embodiment, it is possible to rotate both members.

Again according to a further embodiment, it is possible to have an outer and an inner member, which both have a cross-section of non-circular shape.

Again according to a further embodiment, it is possible to move the inner member alternatively in one and the other longitudinal direction to vary the gap between the top or the base area of the inner member and the respective reactor walls.

It is furthermore possible to rotate the members in different rotation directions, or to rotate in the same direction but with different rotation speeds, or to use a temporal variation rotation speed, etc.

Even if in the attached figures and also in the examples always concentrically arranged members are shown or described, respectively, it is of course possible to arrange the inner member body in an eccentric manner, which means that the rotation axis is not in line with the axis of the outer member, which could be e.g. an outer cylinder.

Again, in a further embodiment it is possible that at least one member wall is at least partially permeable for fluids insofar that exchange of components between inside and outside the reactor and/or the mixing vessel is possible. The cylinder wall may be permeable for instance to be used for filtration of components from the reaction mixture in the reactor and/or mixing vessel.

Furthermore, the inner and/or outer member can be made in the form of jacket for different purposes such as for instance for heat exchange.

Finally, it is a question of optimization how to design and dimension the two members like e.g. longitudinal extending bodies. The main point of the basic idea of the present invention is to design and to dimension the two member walls or jackets in such a way that the gap between the two walls or vessel jackets is differing in circumferential direction.

### References Cited

### G.B. Patent Documents:

| | | |
|---|---|---|
| 931 590 A | 7/1963 | Zimmer |
| 2 103 229 A | 7/1982 | Papzian |

### U.S. Patent Documents:

| | | |
|---|---|---|
| 4,175,871 | 11/1979 | Suth et al. |
| 4,911,847 | 3/1990 | Shmidt and Badiali |
| 5,460,447 | 10/1995 | Wu and Arcella |
| 6,099,730 | 8/2000 | Ameer et al. |

### Other Publications:

1) "Advances in Chemical Engineering," vol. 17, pp. 5-8, Academic Press (1992).
2) Zhu, X., and Vigil, R. D., "Banded liquid-liquid Taylor-Couette-Poiseuille flow," AIChE Journal (2001), 47:1932-1940.
3) Haut, B., Ben Amor, H., Coulon, L., Jacquet, A., and Halloin, V., "Hydrodynamics and mass transfer in a Couette-Taylor bioreactor for the culture of animal cells," Chem. Eng. Sci. (2003), 58:777-784.
4) Drozdov, S. M., "A numerical investigation of a modified Couette-Taylor apparatus with application to industrial mixing," Theoret. Comput. Fluid Dynamics (2002), 16:17-18.
5) Resende, M. M., Tardioli, P. W., Fernandez, V. M., Ferreira, A. L. O., Giordano, R. L. C., and Giordano, R. C., "Distribution of suspened particles in a Taylor-Poiseuille vortex flow reactor," Chem. Eng. Sci. (2001), 56: 755-761.
6) Mavros, P., Mann, R., Vlaev, S. D., and Bertrand, J., "Experimnetal visualization and CFD simulation of flow patterns induced by a novel energy-saving dual-configuration impeller in stirred vessels," Trans IChemE (2001), 79:857-866.

## Claims

1. Reactor and/or mixing vessel comprising at least
- an outer in a direction extending vessel-like member (1) and
- an inner in the direction extending member (2) arranged within the outer member, at least one of which is adapted for rotation with respect to the other member, the direction being the rotation axis, and at least one of which has a cross-section at least nearly perpendicular to the rotation axis of non-circular shape in such a way that the gap (a, b) between the inner and the outer members (1, 2) is of non-constant width therebetween in circumferential direction, and
- at least one inlet for introduction of fluid and at least one outlet for discharging fluid in and out of the reactor and/or mixing vessel **characterized in that** the ratio between the average diameter (T) of the outer member (1) to the smallest gap (a) width between the two members is smaller than or equal than 50.

2. Reactor and/or mixing vessel according to claim 1, **characterized in that** the outer member (I) is a cylinder having a cross-section of circular shape and the inner member (2) does have a cross-section of non-circular shape.

3. Reactor and/or mixing vessel according to one of the claims 1 or 2, **characterized in that** the inner member (2) is adapted for rotation with respect to the outer member (1).

4. Reactor and/or mixing vessel according to one of the claims 1 to 3, **characterized in that** at least one member does have a cross-section of non-circular shape.

5. Reactor and/or mixing vessel according to one of the claims 1 to 4, **characterized in that** at least one member does have an elliptic-, a triangle-, a square- or a polygon-like shape as cross-section shape, preferably with rounded off edges.

6. Reactor and/or mixing vessel according to one of the claims 1 to 5, **characterized in that** at least one of the two members does have a wave-like shape and/or comprises longitudinally extending grooves and/or comprises perforations.

7. Reactor and/or mixing vessel according to one of the claims 1 to 6, **characterized in that** both members are adapted for rotation, preferably in opposite direction.

8. Reactor and/or mixing vessel according to one of the claims 1 to 7, **characterized in that** the two members are arranged concentrically.

9. Reactor and/or mixing vessel according to one of the claims 1 to 7, **characterized in that** the two members are arranged eccentrically.

10. Reactor and/or mixing vessel according to one of the claims 1 to 9, **characterized in that** at least one member wall is at least partially permeable for fluids insofar that exchange of component(s) between inside and outside the reactor and/or mixing vessel is possible.

11. Reactor and/or mixing vessel according to one of the claims 1 to 10, **characterized in that** at least one permeable member wall can be used for filtration of component(s) from the reaction mixture in the reactor and/or mixing vessel.

12. Reactor and/or mixing vessel according to one of the claims 1 to 11, **characterized in that** the ratio of width of the largest gap to the smallest gap is more than 1.1, preferably is within the range of 1.2 to 3.

13. Reactor and/or mixing vessel according to one of the claims 1 to 12, **characterized in that** the ratio between the average diameter of the outer member such as e.g. a cylinder to the smallest gap width between the two members is within the range of 5 to 20.

14. Process for reacting and/or mixing of at least one fluid component within a reactor according to one of the claims 1 to 13, **characterized in that** the fluid is mixed or reacted within a gap between an outer and an inner member, at least one of which is of a cross-section of non-circular shape so that the gap width at a fixed position varies with the rotation of at least one of the two members.

15. Process according to claim 14, **characterized in that** components are used to carry out biochemical or bioreactions within a reactor according to one of the claims 1 to 13.

16. Process according to one of the claims 14 or 15, **characterized in that** a single or multiple phase reaction or a mixing process is executed which comprises mixing of components in a reactor according to one of the claims 1 to 13.

17. Polymerization or copolymerization process of monomers and/or oligomers within a reactor according to one of the claims 1 to 13.

18. Use of a reactor according to one of the claims 1 to 13 for a bioreaction of at least one biochemical component.

19. A granulation and/or coagulation process of particles comprising granulating said particles dispersed in a fluid in the granulator or coagulator, respectively, equivalent to a reactor according to one of the claims 1 to 13.

## Patentansprüche

1. Reaktor und/oder Michbehältnis aufweisend mindestens
- ein äusseres in einer Richtung sich erstreckendes behälterartiges Bauteil (1) und
- ein inneres in der Richtung sich erstreckendes Bauteil (2), angeordnet innerhalb des äusseren Bauteiles, wobei mindestens eines davon vorgesehen ist in Bezug auf das andere Bauteil zu rotieren, wobei die Richtung die Rotationsachse ist und wobei mindestens eines davon einen Querschnitt mindestens weitgehend senkrecht zur Rotationsachse von unrunder Form aufweist derart, dass der Spalt (a,b) zwischen dem inneren und dem äusseren Beuteil (1,2) in umlaufender Richtung von nicht konstanter Breite ist und
- mindestens einen Einlass für das Eingeben eines Fluids und mindestens einen Auslass für die Ausgabe des Fluids in und aus dem Reaktor und/oder dem Mischbehältnis, **dadurch gekennzeichnet, dass** das Verhältnis zwischen dem mittleren Durchmesser (T) des äusseren Bauteiles (1) zur kleinsten Spaltbreite (a) zwischen den zwei Bauteilen kleiner oder gleich 50 ist.

2. Reaktor und/oder Mischbehältnis nach Anspruch 1, **dadurch gekennzeichnet, dass** das äussere Bauteil (1) ein Zylinder ist mit einem Querschnitt von kreisrunder Form und das innere Bauteil (2) einen Querschnitt von unrunder Form aufweist.

3. Reaktor und/oder Mischbehältnis nach einem der Ansprüche 1 oder 2, **dadurch gekennzeichnet, dass** das innere Bauteil (2) vorgesehen ist um bezüglich des äusseren Bauteiles (1) zu rotieren.

4. Reaktor und/oder Michbehältnis nach einem der Ansprüche 1 bis 3, **dadurch gekennzeichnet, dass** mindestens eines der Bauteile einen Querschnitt von nicht runder Form aufweist.

5. Reaktor und/oder Mischbehältnis nach einem der Ansprüche 1 bis 4, **dadurch gekennzeichnet, dass** mindestens eines der Bauteile eine elliptische, dreieckige, quadratische oder polygonartige Form als Querschnittsform aufweist, vorzugsweise mit abgerundeten Ecken.

6. Reaktor und/oder Mischbehältnis nach einem der Ansprüche 1 bis 5, **dadurch gekennzeichnet, dass** mindestens eines der Bauteile eine wellenartige Form und/oder in Längsrichtung Rillen und/oder Perforationen aufweist.

7. Reaktor und/oder Mischbehältnis nach einem der Ansprüche 1 bis 6, **dadurch gekennzeichnet, dass** beide Bauteile für Rotation vorgesehen sind, vorzugsweise in entgegengesetzter Richtung.

8. Reaktor und/oder Mischbehältnis nach einem der Ansprüche 1 bis 7, **dadurch gekennzeichnet, dass** die beiden Bauteile konzentrisch angeordnet sind.

9. Reaktor und/oder Mischbehältnis nach einem der Ansprüche 1 bis 7, **dadurch gekennzeichnet, dass** die beiden Bauteile exzentrisch zueinander angeordnet sind.

10. Reaktor und/oder Mischbehältnis nach einem der Ansprüche 1 bis 9, **dadurch gekennzeichnet, dass** mindestens eine Bauteilwandung mindestens teilweise durchlässig ist für Flüssigkeiten insofern, dass der Austausch von Komponenten zwischen innerhalb und ausserhalb des Reaktors und/oder des Mischbehältnisses möglich ist.

11. Reaktor und/oder Mischbehältnis nach einem der Ansprüche 1 bis 10, **dadurch gekennzeichnet, dass** mindestens eine durchlässige Bauteilwandung für Filtration der Komponenten von der Reaktionsmischung im Reaktor und/oder Mischbehältnis verwendet werden kann.

12. Reaktor und/oder Mischbehältnis nach einem der Ansprüche 1 bis 11, **dadurch gekennzeichnet, dass** das Verhältnis der Breite des grössten Spaltes zum kleinsten Spalt mehr als 1.1, vorzugsweise innerhalb dem Bereich von 1.2 - 3 beträgt.

13. Reaktor und/oder Mischbehältnis nach einem der Ansprüche 1 bis 12, **dadurch gekennzeichnet, dass** das Verhältnis zwischen dem mittleren Durchmesser des äusseren Bauteiles wie zum Beispiel eines Zylinders zur kleinsten Spaltbreite zwischen den beiden Bauteilen innerhalb des Bereiches von 5 - 20 liegt.

14. Verfahren für die Reaktion und/oder Mischung von mindestens einer flüssigen Komponente innerhalb des Reaktors nach einem der Ansprüche 1 bis 13, **dadurch gekennzeichnet, dass** die Flüssigkeit innerhalb eines Spaltes zwischen einem äusseren und einem inneren Bauteil gemischt wird oder reagiert, wobei mindestens eines der Bauteile einen Querschnitt von unrunder Form aufweist, sodass die Spaltbreite an einer fixen Stelle mit der Rotation von mindestens einem der beiden Bauteile variiert.

15. Verfahren nach Anspruch 14, **dadurch gekennzeichnet, dass** Komponenten verwendet werden um biochemische oder Bioreaktionen innerhalb eines Reaktors nach einem der Ansprüche 1 bis 13 durchzuführen.

16. Verfahren nach einem der Ansprüche 14 oder 15, **dadurch gekennzeichnet, dass** eine einphasige oder mehrphasige Reaktion oder ein Mischprozess ausgeführt wird, welcher das Mischen der Komponenten in einem Reaktor nach einem der Ansprüche 1 bis 13 aufweist.

17. Polymerisations- oder Copolymerisationsverfahren von Monomeren und/oder Oligomeren in einem Reaktor nach einem der Ansprüche 1 bis 13.

18. Verwendung eines Reaktors nach einem der Ansprüche 1 bis 13 für eine Bioreaktion von mindestens einer biochemischen Komponente.

19. Granulierungs- und/oder Coagulationsverfahren von Teilchen aufweisend die Granulierung besagter Teilchen, welche in einem Fluid im Granulator oder Coagulator dispergiert sind, entsprechend einem Reaktor nach einem der Ansprüche 1 bis 13.

## Revendications

1. Cuve de réacteur et/ou cuve-mélangeur, comprenant au moins
- un élément extérieur (1) en forme de cuve s'étendant dans une direction et
- un élément intérieur (2) s'étendant dans ladite direction disposé à l'intérieur de l'élément extérieur, au moins un desdits éléments étant monté pour pouvoir tourner par rapport à l'autre élément, ladite direction étant l'axe de rotation, et au moins un desdits éléments ayant une section transversale pratiquement perpendiculaire à l'axe de rotation de forme non-circulaire de telle manière que la fente (a,b) entre l'élément intérieur et l'élément extérieur (1,2) présente en direction circonférentielle une largeur non-constante et
- au moins une ouverture d'entrée pour l'introduction d'un fluide et au moins une ouverture de sortie pour la décharge de fluide dans ou hors de la cuve de réacteur et/on la cuve-mélangeur, **caractérisée en ce que** le rapport entre le diamètre moyen (T) de l'élément extérieur (1) et la largeur de fente la plus petite (a) entre les deux éléments soit plus petit ou egal à 50.

2. Cuve de réacteur et/ou cuve-mélangeur selon la revendication 1, **caractérisée en ce que** l'élément extérieur (1) est un cylindre ayant une section transversale circulaire et l'élément intérieur (2) présente une section transversale non-circulaire.

3. Cuve de réacteur et/ou cuve-mélangeur selon l'une des revendications 1 ou 2, **caractérisée en ce que** l'élément intérieur (2) est monté pour pouvoir tourner par rapport à l'élément extérieur (1).

4. Cuve de réaction et/ou cuve-mélangeur selon l'une des revendications 1 à 3, **caractérisée en ce qu'**au moins un desdits éléments présente une section transversale de forme non circulaire.

5. Cuve de réaction et/ou cuve-mélangeur selon l'une des revendications 1 à 4, **caractérisée en ce qu'**au moins un des éléments présente une section transversale de forme elliptique, triangulaire, quadratique ou polygonale, de préférence à bords arrondis.

6. Cuve de réaction et/ou cuve-mélangeur selon l'une des revendications 1 à 5, **caractérisée en ce qu'**au moins l'un desdits deux éléments présente une forme ondulée et/ou comprend des rainures s'étendant longitudinalement et/ou comprend des perforations.

7. Cuve de réaction et/ou cuve-mélangeur selon l'une des revendications 1 à 6, **caractérisée en ce que** les deux éléments sont montés de manière à pouvoir mis en rotation, de préférence en sens inverse.

8. Cuve de réaction et/ou cuve-mélangeur selon l'une des revendications 1 à 7, **caractérisée en ce que** les deux éléments sont montés de façon concentrique.

9. Cuve de réaction et/ou cuve-mélangeur selon l'une des revendications 1 à 7, **caractérisée en ce que** les deux éléments sont montés de façon excentrique.

10. Cuve de réaction et/ou cuve-mélangeur selon l'une des revendications 1 à 9, **caractérisée en ce qu'**au moins une paroi d'élément est au moins partiellement perméable pour fluides de manière à ce qu'un échange de composante(s) entre l'intérieur et l'extérieure de la cuve de réaction et/ou de la cuve-mélangeur soit possible.

11. Cuve de réaction et/ou cuve-mélangeur selon l'une des revendications 1 à 10, **caractérisée en ce qu'**au moins une des parois d'élément perméables peut être utilisée pour la filtration de composante(s) du mélange de réaction dans la cuve de réaction et/ou la cuve-mélangeur.

12. Cuve de réaction et/ou cuve-mélangeur selon l'une des revendications 1 à 11, **caractérisée en ce que** le rapport de la plus grande largeur de la fente par rapport à la fente la plus petite est plus que 1,1, de préférence dans un spectre de 1,2 à 3.

13. Cuve de réaction et/ou cuve-mélangeur selon l'une des revendications 1 à 12, **caractérisée en ce que** le rapport entre le diamètre moyen de l'élément extérieur, comme par exemple d'un cylindre, et la largeur de fente la plus petite entre les deux éléments se situe entre 5 et 20.

14. Procédé pour la réaction et/ou le mélange d'au moins une composante de fluide dans un réacteur selon l'une des revendications 1 à 13, **caractérisé en ce que** le fluide est mélangé ou soumis à une réaction dans une fente entre un élément extérieur et un élément intérieur dont au moins un présente une section transversale de forme non-circulaire, de manière à ce que la largeur de fente dans une position fixe varie avec la rotation d'au moins un des deux éléments.

15. Procédé selon la revendication 14, **caractérisé en ce que** les composantes sont utilisées pour la mise en oeuvre de réactions biologiques ou biochimiques dans un réacteur selon l'une de revendications 1 à 13.

16. Procédé selon l'une des revendications 14 ou 15, **caractérisée en ce qu'**une réaction à phase unique ou multiple ou un procédé mélangeur est mis en oeuvre, comprenant le mixing de composantes dans une cuve selon l'une des revendications 1 à 13.

17. Procédé de polymerisation ou co-polymérisation de monomères et/ou oligomères dans une cuve de réaction selon l'une des revendications 1 à 13.

18. Utilisation d'un réacteur selon l'une des revendications 1 à 13 pour une bioréaction d'au moins une composante biochimique.

19. Procédé de granulation et/ou de coagulation de particules, comprenant la granulation des particules dispersées un fluide dans le granulateur ou coagulateur respectivement équivalent à un réacteur selon l'une des revendications 1 au 13.
